# EUROPÄISCHE PATENTSCHRIFT

(11) **EP 3 001 597 B1**
(45) Veröffentlichungstag und Bekanntmachung des Hinweises auf die Patenterteilung: **22.01.2020**
(21) Anmeldenummer: 14186886.9
(22) Anmeldetag: 29.09.2014
(51) Int. Cl.: H04L 9/08

(54) **Verfahren zur Verschlüsselung von Daten**
Method for encrypting data
Procédé destiné au codage de données

(43) Veröffentlichungstag der Anmeldung: 30.03.2016
(73) Patentinhaber: Appbyyou GmbH, 78582 Balgheim (DE)
(72) Erfinder: Teufel, Thomas, 78582 Balgheim (DE); Fledrich, Stefan, 73207 Plochingen (DE)
(74) Vertreter: Geitz Truckenmüller Lucht Christ

(56) Entgegenhaltungen:
- WO-A1-02/09344
- WO-A1-2013/110253
- US-A1- 2004 083 393
- US-B1- 7 151 832
- "Chapter 1: Overview of Cryptography ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 1 - 48 , 1. Oktober 1996 (1996-10-01), XP001525001, ISBN: 978-0-8493-8523-0 Gefunden im Internet: URL:http://www.cacr.math.uwaterloo.ca/hac/

## Beschreibung

Die vorliegende Erfindung betrifft ein Verfahren zur Verschlüsselung von Daten im Rahmen einer Datenübertragung zwischen zwei Knoten eines Kommunikationsnetzwerks bei dem eine zwischen den beiden Knoten zu versendende Nachricht in dem Sendeknoten mithilfe eines aktiven Schlüssels verschlüsselt und zu dem Empfangsknoten gesendet und dort mithilfe des aktiven Schlüssels entschlüsselt wird, wobei die Nachricht einen Header und einen Nutzdatenteil aufweist.

Ein derartiges Verfahren ist bereits aus der WO 2013/110253 A1 bekannt. Dort findet ein Schlüsselaustausch optisch oder über eine NFC-Verbindung statt, etwa indem auf einem Bildschirm eines der Knoten ein Code angezeigt und dieser, etwa in Form eines Barcodes, von dem anderen Knoten erfasst wird. Ein späterer erneuter Austausch eines Schlüssels ist hierbei aber nicht vorgesehen.

Aus der US 7,151,832 B1 ist ferner ein Verfahren zur Verschlüsselung von Audio- und Videodaten bekannt, bei dem ein Schlüssel zur Kodierung eines Nutzdatenstroms eingesetzt wird, dieser aber dem Nutzdatenstrom mittels eines Multiplexers hinzugefügt wird, so dass er unverschlüsselt vorliegt. Für sicherheitskritische Anwendungen ist dieses Verfahren daher nicht vorgesehen.

Darüber hinaus ist es aus der US 2004/0083393 A1 bekannt, einen Schlüssel zur Kodierung einer elektronischen Nachricht zu verwenden und dabei einen neuen Schlüssel für die Verwendung in späteren Nachrichten mitzusenden, der in einem Verschlüsselungsdatenteil mit der Nachricht übertragen wird. Hierdurch erfolgt ein ständiger Austausch des Schlüssels, der in jeder Nachricht als Nutzlast neu übermittelt wird.

Derartige Verfahren sind bereits seit langem bekannt und werden in allen Bereichen der Kommunikation eingesetzt, um den Inhalt von Datenübertragungen gegenüber Dritten geheim zu halten. Mithilfe des aktiven Schlüssels wird eine im Klartext für den Empfänger verständliche Nachricht so überarbeitet, dass deren Sinngehalt nicht mehr erkennbar ist, wobei jedoch bei der Überarbeitung der Nachricht so vorgegangen wird, dass der Vorgang beim Empfänger in umgekehrter Richtung erneut durchgeführt werden kann, um zum ursprünglichen Text zu gelangen. Selbstverständlich ist ein solches Verfahren nicht darauf festgelegt, mit Text zu arbeiten, grundsätzlich kann ein Verschlüsselungsverfahren auf jeder Art von geordneten Zeichen durchgeführt werden. Insbesondere eignen sich Computerdaten für derartige Verschlüsselungen, da sie letztlich auf verschiedene Codetabellen, zumindest aber auf einen Binärcode, zurückführbar sind.

Im Zuge einer Verschlüsselung werden solche Schlüssel bereitgehalten, welche beiden Seiten einer aufgebauten Verbindung bekannt sind, so dass beide Seiten über die Möglichkeit der Kodierung und der umgekehrten Dekodierung verfügen. Es besteht weiterhin Freiheit bei der Auswahl der Kodierungsverfahren, wobei eine einfache Kodierung vorsehen könnte, ein Hinzuzählen von Zahlenwerten zu einem Textzeichen bzw. Wertzeichen durchzuführen, während die Dekodierung in umgekehrter Richtung durch eine Subtraktion realisiert wird. Eine solche Berechnung kann ohne großen Rechenaufwand und damit ohne eine Verzögerung des Auslesens eines solchen Codes durchgeführt werden, wobei die Sicherheit dieser Verschlüsselung maßgeblich davon abhängig ist, dass der verwendete aktive Schlüssel der Verbindung einem Dritten, welcher die Verbindung abhören möchte, unbekannt bleibt. In der Regel ergibt es sich, dass bei einer einzigen erfolgreichen Abhörung einer Nachricht der Schlüssel bekannt ist und damit ein Dritter in die Lage versetzt wird, alle folgenden Nachrichten und im Falle einer zuvor gelungenen Aufzeichnung auch frühere Nachrichten im Nachhinein zu entschlüsseln.

Der vorliegenden Erfindung liegt vor diesem Hintergrund die Aufgabe zu Grunde, ein Verfahren zu schaffen, welches es erfindungsgemäß erschwert, die Entschlüsselung eines Codes zu bewerkstelligen.

Dies gelingt durch ein Verfahren zur Verschlüsselung von Daten im Rahmen einer Datenübertragung zwischen zwei Knoten eines Kommunikationsnetzwerks gemäß den Merkmalen des Anspruchs 1. Weitere, sinnvolle Weiterbildungen eines solchen Verfahrens können den nachfolgenden Ansprüchen entnommen werden.

Erfindungsgemäß ist vorgesehen, dass zunächst zwischen zwei Knoten eines Kommunikationsnetzwerks unter Zuhilfenahme eines aktiven Schlüssels verschlüsselt wird. Die beiden Knoten werden hierzu ihre Nachrichten unter Verwendung des aktiven Schlüssels kodieren und über den ungesicherten Kanal versenden, wobei auf der Empfängerseite eine Dekodierung unter Zuhilfenahme des aktiven Schlüssels erfolgt und dadurch eine Entschlüsselung der Nachricht ermöglicht wird. Neben den in der Nachricht enthaltenen Nutzdaten und dem für die Nachricht erforderlichen Header mit allgemeinen Informationen über den Aufbau der Nachricht, Nachrichtentyp, Empfänger usw. enthält die erfindungsgemäße Nachricht auch einen Verschlüsselungsdatenteil, in welchem Daten eines neuen Schlüssels an den Empfänger versandt werden. Unter Verwendung des aktiven Schlüssels werden also neue Schlüssel ausgetauscht, welche nach einem vollständigen Empfang des neuen Schlüssels dann als neuer aktiver Schlüssel eingesetzt werden. Nach einem Schlüsselwechsel wird sogleich damit begonnen, in einem Verschlüsselungsdatenteil der nächsten Nachricht einen wiederum neuen Schlüssel mit dem Kommunikationspartner auszutauschen und so weiter.

Hierdurch ergibt sich ein ständiges Austauschen der verwendeten aktiven Schlüssel, so dass die Wahrscheinlichkeit groß ist, dass die unter Verwendung eines aktiven Schlüssels versendeten Datenmengen nicht für eine Dekodierung des aktiven Schlüssels ausreichen. Durch einen ständigen Wechsel des Schlüssels wird es schwierig, den ständigen Schlüsseländerungen zu folgen, so dass selbst in dem unwahrscheinlichen Fall, dass eine Dekodierung des Schlüssels stattfindet, beim nächsten unvollständigen Empfang einer Nachricht eine abhörende Person wieder den Anschluss verliert.

Eine Schwachstelle in diesem Verfahren stellt es dar, wenn der erste verwendete aktive Schlüssel bereits unkodiert und unverschlüsselt zur Verfügung gestellt werden würde. Daher erscheint es erforderlich, auch diesen ersten Schlüssel in einer sicheren Art und Weise auszutauschen, so dass hier bevorzugtermaßen ein erster Schlüsselaustausch zwischen den beiden mit einander kommunizierenden Knoten über eine Nahfeldkommunikation abgewickelt wird.

Im Rahmen einer derartigen Nahfeldkommunikation kann etwa an einem ersten Knoten der aktive Schlüssel in einen Barcode kodiert werden und über ein geeignetes Ausgabemittel dargestellt werden, welches der zweite Knoten dann mithilfe eines Eingabemittels abscannt. Hierbei kann der erste Knoten etwa ein Mobiltelefon sein, welches über seinen Bildschirm eine Darstellung des Barcodes repräsentiert, welche dann mithilfe einer Kamera durch das zweite Eingabemittel in Form eines zweiten an der Kommunikation teilnehmenden Smartphones abscannen kann.

Ohne Weiteres kann jedoch auch die Nahfeldkommunikation über andere Wege, beispielsweise eine Ad-hoc-Funkverbindung mit kurzer Reichweite, erfolgen. In beiden Fällen ist im Wesentlichen die kurze Reichweite und die Möglichkeit der Sicherstellung der Abhörsicherheit schon durch bloße Anwesenheitskontrolle ausschlaggebend für die Sicherheit der Verbindung. Insbesondere bei der Darstellung eines Barcodes auf einem Bildschirm eines Smartphones kann ohne Weiteres sichergestellt werden, dass dieser Barcode nicht von einem anderen Gerät eingelesen werden kann, als von dem Bestimmungsgerät.

Im Zuge der Kommunikation ist es vorgesehen, dass eine Verschlüsselung der zu verschlüsselnden Nachricht mit dem aktiven Schlüssel dadurch erfolgt, dass ein Verrechnen der Zeichenwerte der Nachricht mit den Zeichenwerten des aktiven Schlüssels erfolgt. Beispielsweise kann hierfür eine Addition der einzelnen Zeichenwerte des aktiven Schlüssels auf die Zeichenwerte der Nachricht durchgeführt werden. In umgekehrter Richtung wird der Empfänger der verschlüsselten Nachricht diese durch ein Verrechnen der Zeichenwerte des aktiven Schlüssels mit den Zeichenwerten der verschlüsselten Nachricht gemäß einer Umkehrfunktion der zunächst vorgegebenen Funktion zum Verschlüsseln der Nachricht wieder entschlüsseln. Im angegebenen Beispiel könnte die Addition durch eine Subtraktion der Zeichenwerte des aktiven Schlüssels von den Zeichenwerten der verschlüsselten Nachricht erfolgen.

In aller Regel werden die Längen des Schlüssels und der zu verschlüsselnden Nachricht unterschiedlich sein. In dem Fall, dass der Schlüssel länger ist als die Nachricht, werden so lange Zeichenwerte des Schlüssels mit den Zeichenwerten der Nachricht verrechnet, bis das Ende des Schlüssels erreicht ist. Ist hingegen die Nachricht länger als der aktive Schlüssel, so wird bei Erreichen des Endes des Schlüssels wieder an der ersten Stelle des Schlüssels angefangen und dieser solange durchiteriert, bis das Ende der Nachricht erreicht ist.

Um die Variationen der Kodierung weiter zu vergrößern kann die Nachricht einen unverschlüsselten Zeichenwert enthalten, welche einen Offset des aktiven Schlüssels angibt. Anstatt an der ersten Stelle des Schlüssels bei der Kodierung anzufangen, wird zunächst der Offset angesprungen und erst an dieser Stelle mit einem Kodieren unter Zuhilfenahme des Schlüssels begonnen. Wie bereits angedeutet ist es erforderlich, diesen Offset unverschlüsselt zu übermitteln, so dass der Empfänger über die Information verfügt, an welcher des aktiven Schlüssels der Empfänger mit dem Dekodieren beginnen muss.

Im Falle eines Verlusts der Verbindung ist es erforderlich, einen neuen Austausch des aktiven Schlüssels vorzunehmen, welcher idealerweise nochmals gesichert durchgeführt werden muss. Um hierfür einen übermäßigen Aufwand zu vermeiden, wird beim ersten Austausch mit einigem Vorteil ein Ausweichschlüssel mit ausgetauscht, welcher regelmäßig dann eingesetzt wird, wenn ein Verbindungsverlust festgestellt wird. Dem Nutzdatenteil der Nachricht angehängt ist regelmäßig eine Prüfsumme, welche eine korrekte Übermittlung der Nachricht überprüfen lässt. Sofern im Zuge einer normalen Kommunikation festgestellt wird, dass diese Prüfsumme nicht in Ordnung ist, wird das System gegenprüfen, ob hier mit dem Ausweichschlüssel gearbeitet worden ist. In diesem Fall wird das System bei seiner Antwort wiederum mit dem Ausweichschlüssel kodieren und den bereits zuletzt begonnenen Austausch eines neuen Schlüssels fortsetzen.

Hinsichtlich der Bildung des Schlüssels können sowohl der aktive Schlüssel als auch der neue Schlüssel und der Ausweichschlüssel jeweils aus zufällig gewählten Zeichenketten bestehen. Die Länge der verwendeten Schlüssel kann dynamisch gewählt werden, so dass sowohl kurze als auch lange Schlüssel eingesetzt werden können um erneut das Dekodieren zu erschweren.

Die vorstehend beschriebene Erfindung wird im Folgenden anhand eines Ausführungsbeispiels näher erläutert.

Es zeigen
- Figur 1: einen Sendeknoten und einen Empfangsknoten mit jeweils einem Speicher, in dem ein aktiver Schlüssel, ein neuer Schlüssel und ein Ausweichschlüssel vorgehalten sind in einer schematischen Darstellung, sowie
- Figur 2: der Aufbau einer erfindungsgemäßen Nachricht, ebenfalls in schematischer Darstellung.

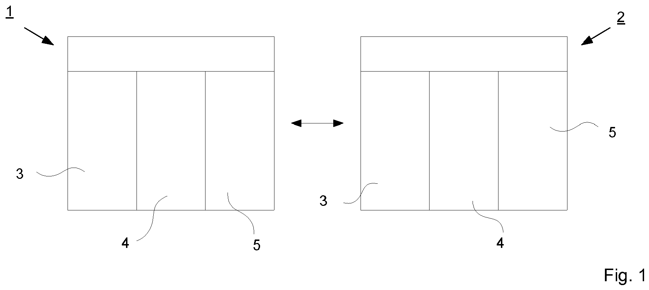

Figur 1 zeigt einen Sendeknoten 1 sowie einen Empfangsknoten 2, welche in einer gegenseitigen Datenverbindung stehen. Der Sendeknoten 1 wird im Rahmen dieser Verbindung dem Empfangsknoten 2 eine Nachricht 6 übermitteln, welche vom Sendeknoten 1 zum Empfangsknoten 2 transportiert werden soll. Hierzu wird der Sendeknoten 1 die Nachricht 6 verschlüsseln, wozu ein aktiver Schlüssel 3 Einsatz findet. Zu der Nachricht 6 wird hierzu bitweise der aktive Schlüssel 3 addiert, wobei nach Erreichen des Endes des aktiven Schlüssels 3 wieder an seiner ersten Stelle angefangen wird. Die Nachricht 6 enthält zudem einen Verschlüsselungsdatenteil 9, in welchem ein neuer Schlüssel 4 von dem Sendeknoten 1 zu dem Empfangsknoten 2 übermittelt wird. Der Verschlüsselungsdatenteil 9 kann entweder einen vollständigen neuen Schlüssel 4 enthalten, oder aber einen Teil eines neuen Schlüssels 4. Nach einer vollständigen Übertragung des neuen Schlüssels 4 werden die beiden Knoten 1 und 2 dazu übergehen, den neuen Schlüssel 4 als aktiven Schlüssel 3 für die weitere Kommunikation zu verwenden und erneut einen neuen Schlüssel 4 auszutauschen.

Ebenfalls im Speicher des Sendeknotens 1 und des Empfangsknotens 2 befindet sich ein Ausweichschlüssel 5, welcher dann Einsatz findet, wenn die Verbindung gestört wurde und eine geordnete Fortführung der Verbindung nicht weiter möglich ist.

Ein erstes Austauschen des aktiven Schlüssels 3 und des Ausweichschlüssels 5 zwischen dem Sendeknoten 1 und dem Empfangsknoten 2 wird über eine Nahfeldkommunikation vorgenommen, welche ein Abhören von dritter Seite verhindert.

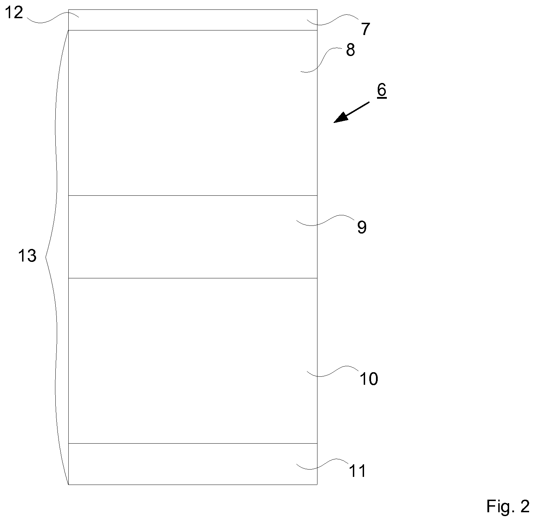

Figur 2 zeigt den Aufbau der Nachricht 6, welche von dem Sendeknoten 1 an den Empfangsknoten 2 übermittelt wird. Die Nachricht 6 beginnt mit einem Offset 7, gefolgt von dem so genannten Header 8, welcher Metadaten zum Aufbau und Inhalt der nachfolgenden Nachricht 6 enthält. Hieran wiederum anschließend folgt ein Verschlüsselungsdatenteil 9, in welchem der neue Schlüssel 4 zum Empfangsknoten 2 transportiert wird. Hierbei muss der Verschlüsselungsdatenteil 9 nicht notwendigerweise einen vollständigen neuen Schlüssel 4 enthalten, sondern kann ohne Weiteres auch einen Teil eines neuen Schlüssels 4 enthalten, welcher dann in der nächsten Nachricht 6 weiter vervollständigt wird. An den Verschlüsselungsdatenteil 9 anschließend wird der Nutzdatenteil angefügt, in welchem die eigentlich zu transportierenden Daten der Nachricht 6 versendet werden. Am Ende der Nachricht 6 ist eine Prüfsumme 11 angeordnet, welche eine Kontrolle der Vollständigkeit der Nachricht 6 ermöglicht. In dem Fall, dass eine vom System errechnete Prüfsumme mit der mitgesandten Prüfsumme 11 nicht übereinstimmt, muss die Nachricht 6 als unrichtig verworfen und gegebenenfalls die Kommunikation auf eine Verschlüsselung mit dem Ausweichschlüssel 5 umgestellt werden.

Innerhalb der Nachricht 6 ist lediglich der erste Teil, also der Offset 7, als Datenteil mit unverschlüsselten Daten 12 anzusehen. Der Rest der Nachricht besteht ausschließlich aus mithilfe des aktiven Schlüssels 3 oder des Ausweichschlüssels 5 verschlüsselten Daten 13.

Vorstehend beschrieben ist somit ein Verfahren zur Verschlüsselung von Daten im Rahmen einer Datenübertragung zwischen zwei Knoten eines Kommunikationsnetzwerks, welches im Rahmen einer Kommunikation vorsieht, permanent neue Schlüssel zwischen den Sendeknoten und den Empfangsknoten auszutauschen, welche jeweils nach einer vollständigen Übermittlung den bisher geltenden Schlüssel ersetzen.

### BEZUGSZEICHENLISTE

- 1: Sendeknoten
- 2: Empfangsknoten
- 3: aktiver Schlüssel
- 4: neuer Schlüssel
- 5: Ausweichschlüssel
- 6: Nachricht
- 7: Offset
- 8: Header
- 9: Verschlüsselungsdatenteil
- 10: Nutzdatenteil
- 11: Prüfsumme
- 12: unverschlüsselte Daten
- 13: verschlüsselte Daten

## Patentansprüche

1. Verfahren zur Verschlüsselung von Daten im Rahmen einer Datenübertragung zwischen zwei Knoten eines Kommunikationsnetzwerks bei dem eine zwischen den beiden Knoten zu versendende Nachricht (6) in dem Sendeknoten mithilfe eines aktiven Schlüssels (3) verschlüsselt und zu dem Empfangsknoten gesendet und dort mithilfe des aktiven Schlüssels (3) entschlüsselt wird, wobei die Nachricht einen Header (8) und einen Nutzdatenteil (10) aufweist,
**dadurch gekennzeichnet, dass** die Nachricht neben dem Header (8) und dem Nutzdatenteil (10) auch einen Verschlüsselungsdatenteil (9) aufweist, in welchem Daten eines neuen Schlüssels (4) versandt werden und nach vollständigem Versand bzw. Empfang des neuen Schlüssels (4) beide Knoten den aktiven Schlüssel (3) für die weitere Kommunikation durch den neuen Schlüssel (4) ersetzen, wobei zwischen den beiden kommunizierenden Knoten bei einem ersten Schlüsselaustausch des aktiven Schlüssels (3) ein Ausweichschlüssel (5) ausgetauscht wird, auf den regelmäßig im Falle eines Verlusts der Verbindung ausgewichen wird, und wobei der erste Schlüsselaustausch des aktiven Schlüssels (3) und des Ausweichschlüssels (5) zwischen den beiden Knoten über eine Nahfeldkommunikation erfolgt, indem der erste Knoten den ersten Schlüssel in einen Barcode codiert und über ein Ausgabemittel darstellt und der zweite Knoten den Barcode über ein Eingabemittel einscannt.

2. Verfahren gemäß Anspruch 1, **dadurch gekennzeichnet, dass** die Verschlüsselung der Nachricht (6) mit dem aktiven Schlüssel (3) durch ein Verrechnen der Zeichenwerte des aktiven Schlüssels (3) mit den Zeichenwerten der unverschlüsselten Nachricht (6) gemäß einer vorgegebenen Funktion und die Entschlüsselung der Nachricht (6) durch ein Verrechnen der Zeichenwerte des aktiven Schlüssels (3) mit den Zeichenwerten der verschlüsselten Nachricht (6) gemäß einer Umkehrfunktion der vorgegebenen Funktion erfolgt.

3. Verfahren gemäß Anspruch 2, **dadurch gekennzeichnet, dass** in dem Fall, dass die Nachricht (6) länger ist als der aktive Schlüssel (3), die Zahlenwerte des aktiven Schlüssels (3) iteriert werden.

4. Verfahren gemäß Anspruch 2 oder 3, **dadurch gekennzeichnet, dass** die Nachricht (6) einen Zeichenwert enthält, welcher nicht verschlüsselt wird und welcher einen Offset (7) des aktiven Schlüssels (3) angibt, bei dem mit der Verschlüsselung begonnen wird.

5. Verfahren gemäß einem der vorhergehenden Ansprüche, **dadurch gekennzeichnet, dass** die verwendeten aktiven Schlüssel (3) und neuen Schlüssel (4) aus zufällig gewählten Zeichenketten bestehen.

6. Verfahren gemäß einem der vorhergehenden Ansprüche, **dadurch gekennzeichnet, dass** die verwendeten aktiven Schlüssel (3) und neuen Schlüssel (4) in unterschiedlicher Länge gebildet sind.

## Claims

1. A method for encrypting data as part of a data transmission between two nodes of a communication network in which a message (6) to be sent between the two nodes is encrypted in the transmitting node with the aid of an active key (3) and sent to the receiving node, where it is decrypted with the aid of the active key (3), the message having a header (8) and a payload part (10),
**characterized in that**, in addition to the header (8) and the payload part (10), the message also has an encryption data part (9) in which data of a new key (4) are sent and, upon complete transmission or reception of the new key (4), both nodes replace the active key (3) with the new key (4) for further communication, with an alternate key (5) being exchanged between the two communicating nodes in a first key exchange of the active key (3) that is regularly reverted to in the event that the connection is lost, and with the first key exchange of the active key (3) and the alternate key (5) being performed between the two nodes by means of near-field communication **in that** the first note encodes the first key into a bar code and displays it via an output means and the second node scans the bar code by means of an input means.

2. The method as set forth in claim 1, **characterized in that** the encryption of the message (6) with the active key (3) is performed by offsetting the character values of the active key (3) with the character values of the unencrypted message (6) according to a predetermined function, and the decryption of the message (6) is performed by offsetting the character values of the active key (3) with the character values of the encrypted message (6) according to an inverse of the predetermined function.

3. The method as set forth in claim 2, **characterized in that**, in the event that the message (6) is longer than the active key (3), the numerical values of the active key (3) are iterated.

4. The method as set forth in claim 2 or 3, **characterized in that** the message (6) contains a character value which is not encrypted and which indicates an offset (7) of the active key (3) at which encryption is started.

5. The method as set forth in any one of the preceding claims, **characterized in that** the active keys (3) and new keys (4) used consist of randomly selected character strings.

6. The method as set forth in any one of the preceding claims, **characterized in that** the active keys (3) and new keys (4) used are of different lengths.

## Revendications

1. Procédé de cryptage de données dans le cadre d'une transmission de données entre deux nœuds d'un réseau de communication, procédé dans lequel un message (6) à envoyer entre les deux nœuds est crypté dans le nœud émetteur à l'aide d'une clé active (3) et envoyé au nœud récepteur où il est décrypté à l'aide de la clé active (3), le message comportant un en-tête (8) et une partie de données utile (10), **caractérisé en ce que**, en plus de l'en-tête (8) et de la partie de données utile (10), le message comporte également une partie de données de cryptage (9) dans laquelle des données d'une nouvelle clé (4) sont envoyées et, après transmission ou réception complète de la nouvelle clé (4), les deux nœuds remplacent la clé active (3) par la nouvelle clé (4) pour la communication ultérieure, une clé alternative (5) étant échangée entre les deux nœuds en communication lors d'un premier échange de clé de la clé active (3), clé alternative à laquelle on revient régulièrement en cas de perte de la connexion, le premier échange de clé de la clé active (3) et de la clé alternative (5) étant effectué entre les deux nœuds au moyen d'une communication en champ proche du fait que le premier nœud code la première clé sous la forme d'un code à barres et l'affiche à l'aide d'un moyen de sortie et le deuxième nœud balaye le code à barres à l'aide d'un moyen d'entrée.

2. Procédé selon la revendication 1, **caractérisé en ce que** le cryptage du message (6) avec la clé active (3) est effectué par déduction des valeurs de caractère de la clé active (3) avec les valeurs de caractère de la clé du message non crypté (6) selon une fonction prédéterminée et le décryptage du message (6) est effectué par déduction des valeurs de caractère de la clé active (3) avec les valeurs de caractère du message crypté (6) selon une fonction inverse prédéterminée.

3. Procédé selon la revendication 2, **caractérisé en ce que**, dans le cas où le message (6) est plus long que la clé active (3), les valeurs numériques de la clé active (3) sont itérées.

4. Procédé selon la revendication 2 ou 3, **caractérisé en ce que** le message (6) contient une valeur de caractère qui n'est pas cryptée et qui indique un décalage (7) de la clé active (3) à laquelle le cryptage est commencé.

5. Procédé selon l'une des revendications précédentes, **caractérisé en ce que** les clés actives (3) et les nouvelles clés (4) utilisées comprennent des chaînes de caractères sélectionnées de manière aléatoire.

6. Procédé selon l'une des revendications précédentes, **caractérisé en ce que** les clés actives (3) et les nouvelles clés (4) utilisées ont des longueurs différentes.
